# EUROPEAN PATENT APPLICATION

(11) **EP 2 025 629 A1**
(43) Date of publication of application: **18.02.2009**
(21) Application number: 08102870.6
(22) Date of filing: 25.03.2008
(51) Int. Cl.: B65G 57/16

(54) **A station for inserting articles arranged in jointd stacks, one article inside another**

(30) Priority: 27.03.2007 IT BO20070220
(71) Applicant: S.T.S. S.r.l., 40011 Anzola Emilia (Bologna) (IT)
(72) Inventor: Montali, Gian Luigi, 41058, VIGNOLA (MODENA) (IT); Grilli, Gian Luca, 41058, VIGNOLA (MODENA) (IT)
(74) Representative: Dall'Olio, Giancarlo

(57) **Abstract**

A station for inserting articles arranged in lines, the articles (8) having a substantially truncoconical profile, jointed one inside another, the articles (8) being moved by conveyor organs (1) along a transfer line (7) and being pressed one against another, the station (6) comprising: organs (17, 21), destined to intercept portions (20) of at least an advancing article (8), impressing a torque thereon which, in combination with the pressure action to which the article (8) is subjected, is such as to determine a relative rotation of the article (8) with respect to a preceding article (8) up to when a joint-coupling thereof occurs.

## Description

The invention relates to the technical sector of packaging in batches of articles that can be joint-inserted one inside another, such as for example cups made of synthetic resin for food use.

In a known apparatus for realising packs of cup batches having a truncoconical shape and a regular profile, the relative production line can comprise, generally: a curling machine, located downstream of the heat-forming machine of synthetic resin cups, for realising the upper projecting edge of the preformed cups, the cups being inserted one in another in outlet from the curling machine, in a given advancement direction; a functional magazine associated to the curling machine, which enables absorption of the production in the case of obstructions or anomalies occurring inside the apparatus and devices downstream; a station for counting the cups and for the relative separation thereof into batches, arranged downstream of the magazine; and finally a packing machine of the batches thus formed.

European patent no. EP 0 302 837, of which a short description follows herein with reference to figure 1, and of which the present applicant is owner, concerns a device for calculating a predetermined number of articles, inserted one inside another, making up a batch of articles.

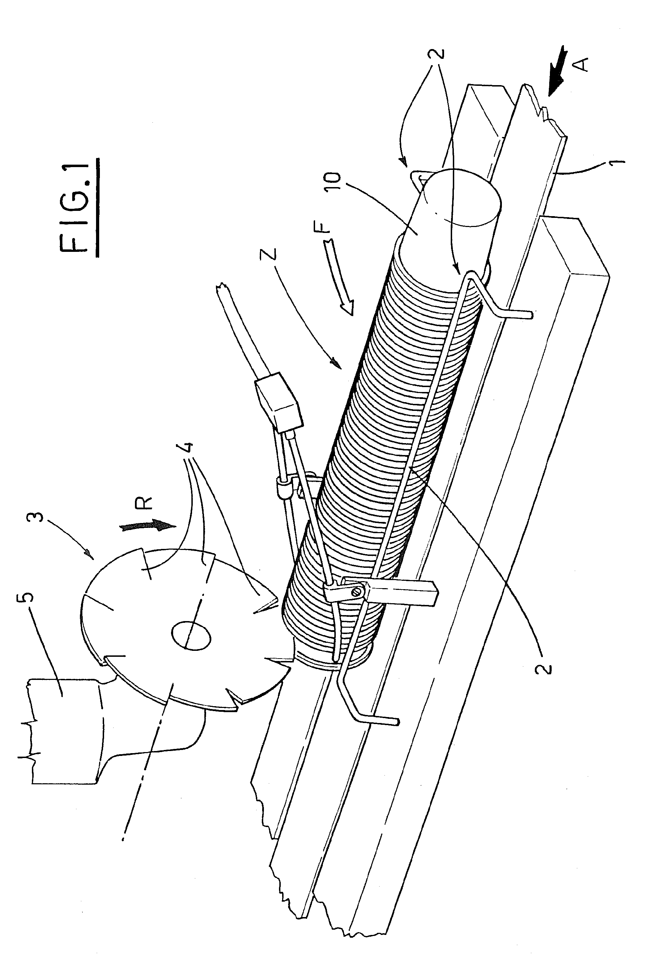

With reference to figure 1, the above-mentioned device comprises: means for conveying 1 a stack F of articles 10, in the example truncoconical cups, inserted one in another and drawn in an advancement direction A; a pair of longitudinal rods 2, mutually opposite for guiding the stack F of cups 10; a disc 3 arranged above the stack F which enables advancement of the cups 10 one at a time, the disc having a relative external circular crown sub-divided into sectors 4 each rotated by a predetermined angle, similarly to blades of a propeller, so that a distance between contiguous edges of two successive sectors 4 enables insertion of the edge of one cup 10 along in the stack at the external circumference of the disc 3.

The disc is activated by motor organs 5 rotating in a direction R.

During functioning the conveyor means 1 push the stack F of cups 10 in abutment against the disc 3, so that an accumulation zone Z is created at the disc 3, at which each cup 10 presses against the next cup 10; here the cups 10 are completely inserted one inside another and the relative upper ends thereof are a same distance away from one another. At each operating cycle the disc 3 is made to rotate in the direction R by an overall angle which is a multiple of the angle of each sector 4, thus enabling the passage of a corresponding number of cups 10, in the example equal to the number forming a single batch.

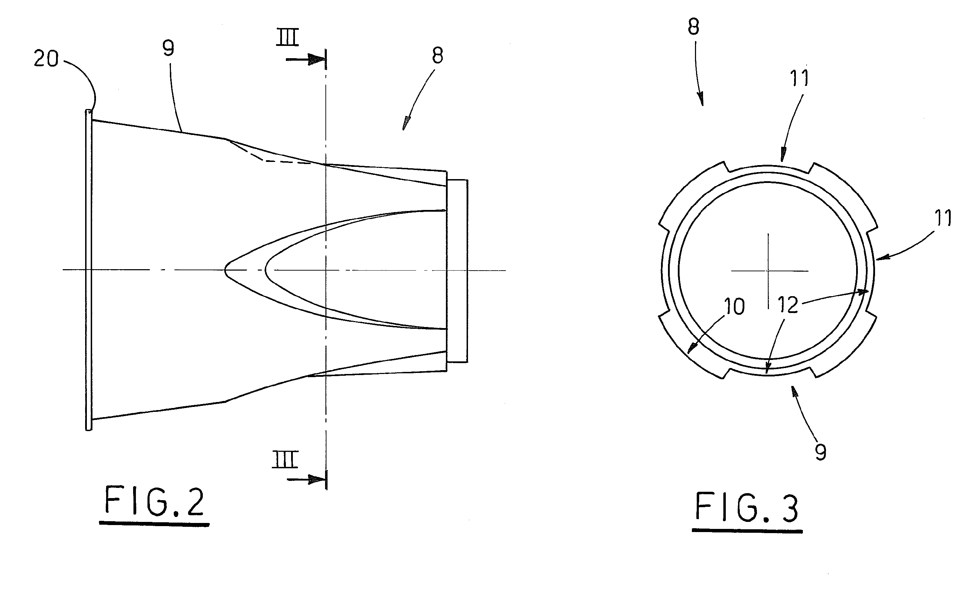

At present truncoconical cups of a type known as "easy-grip" are gaining strength on the market, which, beyond having a part of the external surface which is rough, to facilitate grip thereof, are distinguished by a special profile in which the external surface of the cup is complementary to the internal surface of an identical cup, in the sense that recesses in the external lateral surface correspond to projections in the internal surface: by way of example, figure 2 shows a lateral view of a cup of this type, while figure 3 shows a relative transversal section. Cups made in this way, therefore, can completely insert one in another only by jointing; in any other way their insertion would be merely partial.

The above-described patented device operates correctly only in a case in which the cups arrive in the accumulation zone completely joint-inserted one in another; in a contrary case, the different step between the edge of a cup and the next would cause a malfunctioning of the device itself. In practical cases it has been found that the stack arriving in the accumulation zone comprises cups which are both completely joint-inserted in one another and cups inserted partially in one another; this causes a whole series of drawbacks such as cup counting errors, blockage and malfunctioning of the counting and separating device object of the patent.

Problems very similar to these can also be found in the counting and separating devices of known type, not described, which in order to operate correctly require the complete joint-insertion of the cups stacking up, i.e. their distancing by a same step.

The aim of the present invention, therefore, consists in providing an insertion station of articles arranged in a jointed row, one inside another, which satisfactorily solves the drawbacks as described above, relating to the prior art, in relation to the use of articles, for example truncoconical cups, which are completely insertable one inside another only by jointing.

A further aim of the present invention consists in providing a station for insertion of articles arranged in a jointed row one inside another, which is reliable, which does not limit the operating velocity of the apparatus in which it is inserted and which is relatively inexpensive with respect to the advantages pursued.

The above aims are obtained by a station for inserting articles arranged in jointed stacks, one article inside another article, with each of the articles having a substantially truncoconical profile and exhibiting recesses and/or projections, complementary to projections and/or recesses of a further and identical article, respectively, in order to enable complete insertion of an article inside another adjacent article by means of a joint coupling, the articles further being arranged in a line, each of these articles being either fully inserted into an adjacent article, with a consequent mutual joint coupling, or being only partially inserted, and all of the articles being moved by conveyor organs along a transfer line in an advancement direction and being pressed one against another in a same direction as the advancement direction, characterised in that it comprises: organs arranged in proximity of at least a section of the transfer line, destined to intercept corresponding peripheral portions of at least an article advancing in the advancement direction, impressing thereon a torque with respect to a development axis thereof which, in combination with the pressure action to which it is subjected, is such as to determine a joint-coupling of the article with another and preceding article, in a case where the joint-coupling has not already occurred.

The characteristics of the invention which do not emerge from the above will be better described in the following, in agreement with what is reported in the claims and with the aid of the appended figures of the drawings, in which:
figure 1 is, in perspective view, the described known-type device for counting and separating the cups into batches, inserted in a production line;
figure 2 is a lateral view of a cup having a truncoconical shape and an irregular profile to facilitate grip ("easy-grip" cups);
figure 3 is the view along section III-III of figure 2;
figures 4, 5 illustrate the station which is object of the present invention, arranged at a point of the production line of an apparatus for packing cups in batches, respectively at two particularly significant operating instants.

In the description that follows, explicit reference will be made to the article counting and separating device of European patent no. EP 0 302 837, described in the introduction hereto in agreement with what is illustrated in figure 1; this is merely for the purpose of description and example, and is not limiting.

With reference to the enclosed figures of the drawings, 6 denotes in its entirety the station of the present invention, destined to be functionally inserted in a region of the transfer or production line 7 of a known apparatus, not indicated and of the type described in the preamble hereto, for example for edging truncoconical cups 8, the separation thereof into batches and finally the packing thereof; the type of article 8 to which reference is made herein below is for example a cup 8 having a substantially truncoconical shape, also known as "easy-grip" inasmuch as conformed to facilitate grip thereof; an example of a cup 8 of this type is illustrated in figures 2, 3; it exhibits a special profile in which the external surface of the cup 9 is complementary to the internal surface 10 of an identical cup, in the sense that recesses 11 afforded on the external lateral side 9 thereof correspond to projections 12 from the internal lateral side 10, and vice versa. By way of example, joint-insertion of a cup into another can occur with slight play, so that one can rotate with respect to the other with a contained angular excursion.

The station 6 is upstream of the counting and separating device (for example the one illustrated in figure 1) with respect to the advancement direction A, operating for example at the accumulation zone Z of the cups 8, where as has been mentioned the cups 8 pushed by the conveyor means 1 accumulate, pressing one against a preceding one.

The station 6 is constituted for example by two units 13, 14, identical and arranged at respective sides of the transfer line 7, at two distinct sections 15, 16, the units 13, 14 operating complementarily to one another: the first unit 13 comprises a first pulley 17 rotated, for example in continuous motion, by first actuator organs 18 in a first rotation direction M1, the first pulley 17 destined contemporaneously to intercept, with the active surface 19 thereof, the upper edges 20 of several cups 8 transiting along the line 7 in the advancement direction A, in this way impressing on each cup a first rotation torque CR1; the second unit 14, similarly, comprises a second pulley 21 rotated, for example in continuous motion, by second actuator organs 22 in a second rotation direction M2, opposite the first rotation direction M1, the second pulley 21 being destined contemporaneously to intercept, with the active surface 23 thereof, the upper edges 20 of several cups, thus impressing on each cup a second rotation torque CR2, opposite the first torque CR1 and of a same intensity. The first and second pulleys 17, 21 can for example be made of an elastically yielding material and/or a corresponding active surface 19, 23, having a predetermined friction coefficient.

A region is identified which is fixed in the transfer line 7 comprised between the two pulleys 17, 21 in which the plurality of cups 8 travelling time by time is subjected to an overall torque produced by the torques CR1, CR2 transmitted by the relatively pulleys 17, 21; in other words, two consecutive cups 8 in the column thus identified transmit an axial force to one another (due to the pressure originating in the accumulation zone Z) and a torque which are well-defined and applied about the relative longitudinal development axes. Consequently to this if two cups 8 are only partially inserted one inside another, the combined effect as described above causes a relative rotation with dragging of the cup 8 which follows with respect to the one which precedes, up until it is joint-coupled thereto; in other words, at the end of this operation the preceding cup is completely joint-inserted in the following cup.

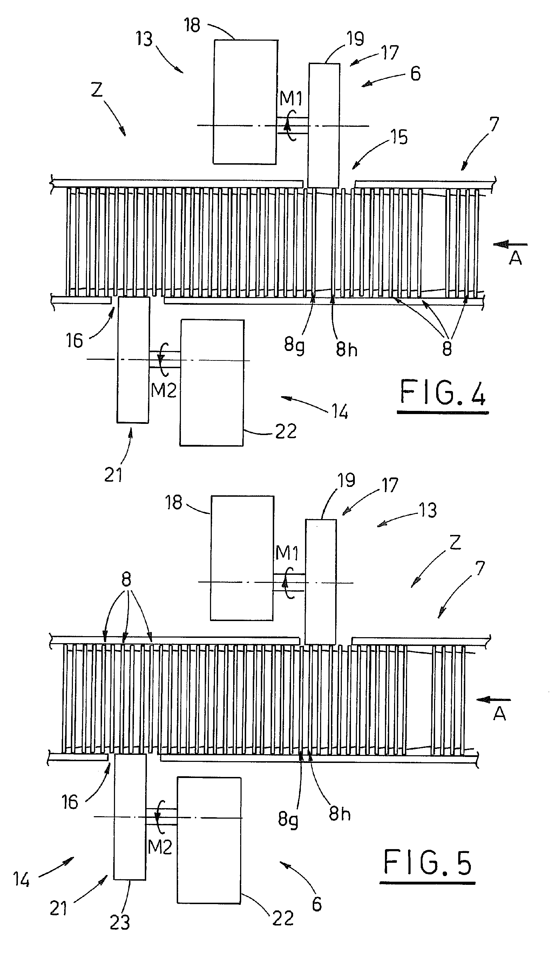

This obviously occurs at the inlet of the cups 8 into the fixed region, i.e. at the position of the first pulley 17. By way of example, figure 4 illustrates the station 6 and the transfer line 7 at an instant of operation in which a cup 8h enters the fixed region, i.e. when it is subjected to the action of the first pulley 17, with the cup 8g which precedes it only partially inserted internally thereof; in agreement with the explanation given herein above, figure 5 illustrates the station and the transfer line 7 at a successive instant, in which the cup 8g is joint-inserted in the cup 8h following it, by effect of the torque and pressure to which they are subjected.

The station 6 of the present invention advantageously brilliantly resolves all the drawbacks in the prior art, mentioned in the introduction hereto, which were connected with the problem of packing truncoconical articles in batches such as to insert them completely one inside another by jointing; the functional insertion of the station of the invention in apparatus, for example for packing cups in batches, of the above-discussed type, thus guarantees optimal functioning of the cup counting station and the relative separation of the cups into batches.

A further advantage of the present invention consists in having defined a reliable station, which does not limit the operating velocity of the apparatus in which it is inserted and which has relatively contained costs with respect to the advantages provided.

It is specified that the station in object can however operate, substantially providing the same advantages as described above, with only a single pulley, for example the first pulley 17, associated to the transfer line 7.

In the example illustrated in the accompanying figures of the drawings each pulley 17, 21 is of such a size as to intercept the edges 20 of several cups 8 at a time; however, it would be possible to provide pulleys 17, 21 of more contained transversal dimensions, able to subject only the edge 20 of a single cup 8 at a time.

In the accompanying figures of the drawings (figure 1, 3) the cups 8, 10 are arranged in a line so that the cup which precedes, with respect to the advancement direction A, is inserted in the cup that follows; the station of the invention, however, operates optimally even if the line of cups is arranged with an opposite orientation, such that it is the cup which follows that is inserted in the cup that precedes (not shown in the figures of the drawings).

The above is intended to be a non-limiting example of the invention; any variations of a practical-applicational nature are understood to fall within the ambit of protection as described herein above and in the following claims.

## Claims

1. A station for inserting articles arranged in jointed stacks, one article inside another article, with each of the articles (8) having a substantially truncoconical profile and exhibiting recesses (11) and/or projections (12), complementary to projections (12) and/or recesses (11) of a further and identical article (8), respectively, in order to enable complete insertion of an article (8) inside another adjacent article (8) by means of a joint coupling, the articles (8) further being arranged in a line, each of these articles (8) being either fully inserted into an adjacent article, with a consequent mutual joint coupling, or being only partially inserted, and all of the articles (8) being moved by conveyor organs (1) along a transfer line (7) in an advancement direction (A) and being pressed one against another in a same direction as the advancement direction (A), **characterised in that** it comprises: organs (17, 21) arranged in proximity of at least a section (15, 16) of the transfer line (7), destined to intercept corresponding peripheral portions (20) of at least an article (8) advancing in the advancement direction (A), impressing thereon a torque (CR1, CR2) with respect to a development axis thereof which, in combination with the pressure action to which it is subjected, is such as to determine a joint-coupling of the article (8) with another and preceding article (8), in a case where the joint-coupling has not already occurred.

2. The station of claim 1, **characterised in that** the intercepting organs (17, 21) comprise at least a pulley, arranged in proximity of a first section (15) of the transfer line (7), drawn in rotation by actuator organs (18) in a rotation direction (M1), destined to intercept, at an active surface (19) thereof, the peripheral portions (20) of at least an article (8) advancing in the advancement direction (A), impressing thereon the rotation torque (CR1) with respect to the development axis of the article (8).

3. The station of claim 1, **characterised in that** the intercepting organs (17, 21) comprise: a first pulley (17), arranged in proximity of a first section (15) of the transfer line (7), rotated by first actuator organs (18) in a first rotation direction (M1), destined to intercept, at the active surface (19) thereof, the peripheral portions (20) of at least an advancing first article (8), impressing thereon a first rotation torque (CR1) with respect to the development axis of the first article (8); and a second pulley (21), arranged in proximity of a second section (16) of the transfer line (7), rotated by second actuator organs (22) in a second rotation direction (M2), opposite the first rotation direction (M1), destined to intercept, at the active surface (23) thereof, the peripheral portions (20) of at least a second article (8) advancing in the advancement direction (A), impressing thereon a second rotation torque (CR2) with respect to the development axis of the second article (8), opposite the first rotation torque (CR1), with the consequence that the group comprising the first and second article (8) and the articles (8) interposed is subjected overall to a torsion, which, in combination with the pressure action to which the articles (8) of the group are subjected, is such as to determine a joint-coupling, where a joint-coupling has not occurred previously, of each article (8) of a same group (8) with a preceding article (8) belonging to the group.

4. The station of claim 2 or 3, **characterised in that** each pulley (17, 21) exhibits a relative active contact surface (19, 23) having a predetermined friction coefficient.

5. The station of claim 2, or 3, or 4, **characterised in that** each pulley (17, 21) exhibits a relative portion comprising the active surface (19, 23), which active surface (19, 23) is elastically yielding.
